# EUROPÄISCHE PATENTSCHRIFT

(11) **EP 4 410 507 B1**
(45) Veröffentlichungstag und Bekanntmachung des Hinweises auf die Patenterteilung: **03.09.2025**
(21) Anmeldenummer: 24154235.6
(22) Anmeldetag: 26.01.2024
(51) Int. Cl.: B25J 19/06

(54) **SICHERHEITSKUPPLUNG UND HANDHABUNGSANLAGE UMFASSEND EINE SICHERHEITSKUPPLUNG**
SAFETY COUPLING AND HANDLING SYSTEM COMPRISING A SAFETY COUPLING
EMBRAYAGE DE SÉCURITÉ ET INSTALLATION DE MANIPULATION COMPRENANT UN EMBRAYAGE DE SÉCURITÉ

(30) Priorität: 30.01.2023 DE 102023102168
(43) Veröffentlichungstag der Anmeldung: 07.08.2024
(73) Patentinhaber: J. Schmalz GmbH, 72293 Glatten (DE)
(72) Erfinder: Schaaf, Walter, 72250 Freudenstadt-Grüntal (DE); Frey, Matthias, 72172 Sulz-Dürrenmettstetten (DE)
(74) Vertreter: DREISS Patentanwälte PartG mbB

(56) Entgegenhaltungen:
- JP-A- 2010 076 056
- JP-A- 2017 047 005

## Beschreibung

Die Erfindung betrifft eine Sicherheitskupplung zur Anbindung eines Endeffektors an einen Manipulator. Die Erfindung betrifft auch eine Handhabungsanlage, umfassend einen Manipulator, einen Endeffektor und eine solche Sicherheitskupplung.

Handhabungsanlagen mit Manipulator und Endeffektor finden in einer Vielzahl von Anwendungsbereichen Verwendung, beispielsweise um Gegenstände aus einem Lagerbehälter in einen Transportbehälter zu überführen oder um ein Werkstück während eines Bearbeitungsprozesses zu halten. Bei dem Manipulator kann es sich beispielsweise um einen Roboter oder einen Portalkran handeln. Der Endeffektor kann beispielsweise als mechanischer Greifer oder als Sauggreifvorrichtung zum Ansaugen eines Gegenstands ausgebildet sein.

Im Zuge der fortschreitenden Automatisierung ist es von steigendem Interesse, Handhabungsanlagen in einem gemeinsamen oder überlappenden Arbeitsbereich mit einem Menschen zu betreiben und gegebenenfalls auch Interaktionen zwischen Mensch und Handhabungsanlage zu ermöglichen (sog. Mensch-Roboter-Kollaboration, kurz MRK). Für einen solchen kollaborierenden Betrieb unter Anwesenheit einer Person ist es von entscheidender Bedeutung, dass von der Handhabungsanlage keine Gefahr für die Person ausgeht, insbesondere in Notsituationen, in denen ein üblicher Prozessablauf gestört ist (bspw. bei einem Stromausfall oder bei einem Defekt der Handhabungsanlage). Zu diesem Zweck ist es beispielswiese bekannt, den Manipulator mit einer Nothaltefunktion auszustatten, sodass der Manipulator bei einem Stromausfall anhält oder in eine Sicherheitskonfiguration verfährt.

Darüber hinaus besteht das Risiko, dass in einer Notsituation (z.B. bei Stromausfall) eine Greifwirkung des Endeffektors beeinträchtigt ist oder sogar vollständig ausfällt, was im schlimmsten Fall zu einer Ablösung eines gegriffenen Gegenstands und zu dessen Herabfallen führen kann.

Aus der JP 2017 0470005 A ist ein medizinisches Unterstützungsgerät bekannt, umfassend einen Mehrgelenkroboter mit einem Mehrgelenkarm und einen Verbindungsmechanismus zum Anbringen eines chirurgischen Werkzeugs an dem Mehrgelenkarm. Der Verbindungsmechanismus kann zwischen einem Befestigungszustand zum Befestigen des chirurgischen Werkzeugs und einem Freigabezustand umgeschaltet werden, in dem der Befestigungszustand gelöst ist. Das Unterstützungsgerät ist derart ausgebildet, dass wenn sich der Zustand eines Patienten in einem abnormalen Zustand befindet, das Gerät eine Sicherheitssteuerung ausführt, um den Zustand des Verbindungsmechanismus in den Freigabezustand zu versetzen.

Hiervon ausgehend beschäftigt sich die Erfindung mit der Aufgabe, eine Handhabungsanlage der eingangs genannten Art auf konstruktiv einfache Weise sicher betreibbar auszugestalten.

Diese Aufgabe wird durch eine Sicherheitskupplung mit den Merkmalen des Anspruchs 1 gelöst. Die Sicherheitskupplung ist zur, insbesondere lösbaren, Anbindung eines Endeffektors an einen Manipulator ausgebildet. Bei dem Endeffektor kann es sich beispielsweise um eine Unterdruckgreifvorrichtung, insbesondere einen Sauggreifer, handeln. Bei dem Manipulator kann es sich beispielsweise um einen Roboter, einen Industrieroboter, einen Leichtbauroboter, einen MRK-Roboter, einen Portalkran, oder dgl. handeln.

Die Sicherheitskupplung umfasst einen Manipulator-Kupplungsabschnitt zur Verbindung der Sicherheitskupplung mit dem Manipulator. Der Manipulator-Kupplungsabschnitt ist insofern insbesondere zur, vorzugsweise wiederholbar lösbaren, Ankopplung der Sicherheitskupplung an den Manipulator ausgebildet. Beispielsweise kann der Manipulator-Kupplungsabschnitt einen Flanschabschnitt aufweisen, welcher mit einem Verbindungsflansch des Manipulators, bspw. einem Roboterflansch eines Roboters verbindbar ist, insbesondere wiederholbar lösbar. Es ist beispielsweise denkbar, dass der Manipulator-Kupplungsabschnitt über eine Schraubverbindung oder eine Bajonettverbindung mit dem Manipulator verbindbar ist.

Die Sicherheitskupplung umfasst außerdem einen Endeffektor-Kupplungsabschnitt zur Verbindung der Sicherheitskupplung mit dem Endeffektor. Der Endeffektor-Kupplungsabschnitt ist insofern insbesondere zur, vorzugsweise wiederholbar lösbaren, Ankopplung eines Endeffektors an die Sicherheitskupplung ausgebildet. Es ist beispielsweise denkbar, dass der Endeffektor-Kupplungsabschnitt über eine Schraubverbindung oder eine Bajonettverbindung mit dem Endeffektor verbindbar ist. Es ist auch denkbar, dass der Endeffektor-Kupplungsabschnitt in Form einer Schnellkupplung ausgebildet ist, welche insbesondere eine werkzeuglose Verbindung des Endeffektors und des Endeffektor-Kupplungsabschnitts ermöglicht. Vorzugsweise sind der Manipulator-Kupplungsabschnitt und der Endeffektor-Kupplungsabschnitt an einander gegenüberliegenden Seiten der Sicherheitskupplung angeordnet.

Die Sicherheitskupplung umfasst außerdem eine Absenkeinrichtung, welche den Manipulator-Kupplungsabschnitt und den Endeffektor-Kupplungsabschnitt miteinander verbindet. Die Absenkeinrichtung erstreckt sich insbesondere entlang einer Absenkachse, welche im angekoppelten Zustand der Sicherheitskupplung an dem Manipulator insbesondere senkrecht, also entlang einer Wirkrichtung der Schwerkraft, orientiert ist. Die Absenkeinrichtung ist dazu ausgebildet, den Endeffektor-Kupplungsabschnitt sowie ein optional daran angekoppelter Endeffektor und insbesondere ein an dem Endeffektor optional gehaltener Gegenstand, kontrolliert, vorzugsweise gebremst, d.h. mit gedrosselter Geschwindigkeit, in Folge der Schwerkraft relativ zu dem Manipulator-Kupplungsabschnitt absinken zu lassen, insbesondere bis der Endeffektor oder der Gegenstand auf einer Abstützung, bspw. einen Boden, abgelegt ist. Die Absenkeinrichtung ist insofern insbesondere derart ausgebildet, dass sie unter Krafteinwirkung, insbesondere durch den Endeffektor und einen daran gehaltenen Gegenstand, kontrolliert verlängerbar ist, sodass ein Abstand zwischen Endeffektor-Kupplungsabschnitt und Manipulator-Kupplungsabschnitt vergrößert wird.

Die Absenkeinrichtung umfasst eine längenveränderbare, insbesondere aus- und wieder einfahrbare, Verbindungseinrichtung, mittels welcher der Manipulator-Kupplungsabschnitt und der Endeffektor-Kupplungsabschnitt verbunden sind. Die Verbindungseinrichtung ist insbesondere derart ausgebildet, dass ein Abstand zwischen Manipulator-Kupplungsabschnitt und Endeffektor-Kupplungsabschnitt entlang einer Absenkachse veränderbar ist.

Die Sicherheitskupplung umfasst außerdem eine Sicherungseinrichtung, welche eine Normalkonfiguration und eine Notkonfiguration einnehmen kann. In der Normalkonfiguration blockiert die Sicherungseinrichtung die Absenkeinrichtung. In der Notkonfiguration gibt die Sicherungseinrichtung die Absenkeinrichtung frei. Insofern ist die Sicherheitseinrichtung insbesondere derart ausgebildet und wirkt mit der Absenkeinrichtung derart zusammen, dass die Absenkeinrichtung in der Normalkonfiguration der Sicherungseinrichtung durch die Sicherungseinrichtung blockiert ist und in der Notkonfiguration der Sicherungseinrichtung durch die Sicherungseinrichtung freigegeben ist. Mit anderen Worten ist die Sicherungseinrichtung derart ausgebildet, dass in der Normalkonfiguration ein Absinken des Endeffektor-Kupplungsabschnitts relativ zu dem Manipulator-Kupplungsabschnitt blockiert, also nicht möglich, ist und in der Notkonfiguration ein Absinken des Endeffektor-Kupplungsabschnitts relativ zu dem Manipulator-Kupplungsabschnitt möglich ist. In der Normalkonfiguration ist somit eine stabile Halterung des Endeffektors an dem Manipulator ermöglicht, sodass der Endeffektor beispielsweise automatisiert durch den Manipulator in definierten Bewegungsbahnen, verlagert werden kann. In der Notkonfiguration ermöglicht es die Absenkeinrichtung dann, dass der Endeffektor-Kupplungsabschnitt und insbesondere ein daran optional angeordneter Endeffektor und ein möglicherweise daran gehaltener Gegenstand kontrolliert, insbesondere mit gemächlicher Geschwindigkeit, absinken können, insbesondere bis sie in einer stabilen Konfiguration auf einer Abstützung angekommen sind.

Eine solche Sicherheitskupplung ermöglicht es, im Normalbetrieb (Sicherungseinrichtung in Normalkonfiguration) einen Endeffektor und einen optional an dem Endeffektor gehaltenen Gegenstand sicher an einem Manipulator zu befestigen und in einer Notsituation (Sicherungseinrichtung in Notkonfiguration) den Endeffektor und den Gegenstand kontrolliert in eine stabile Konfiguration zu überführen. Auf diese Weise wird eine Sicherheitsfunktion bereitgestellt, insbesondere ohne dass zusätzlich externe Sicherungsmaßnahmen (z.B. Schutzzäune um eine Handhabungsanlage oder eine unterbrechungsfreie Stromversorgung) zwingend erforderlich sind. Dadurch, dass die Sicherungskupplung modular zwischen Manipulator und Endeffektor anordenbar ist, wird zudem lediglich ein vergleichsweise geringer Bauraum benötigt, was insbesondere für einen kollaborierenden Betrieb einer Handhabungsanlage mit einer Bedienperson vorteilhaft ist.

Besonders bevorzugt ist es, wenn die Sicherungseinrichtung derart ausgebildet ist, insbesondere einen Auslösemechanismus derart aufweist, dass die Sicherungseinrichtung bei Auftreten einer vorbestimmten Auslösebedingung selbsttätig, also automatisch, aus der Normalkonfiguration in die Notkonfiguration wechselt. Bei der Auslösebedingung handelt es sich insbesondere um das Auftreten einer Notsituation, in welcher ein üblicher Prozessablauf gestört ist. Eine solche Ausgestaltung ermöglicht es, reaktionsschnell und insbesondere ohne Mitwirkung einer Bedienperson, die Absenkeinrichtung freizugeben und somit ein kontrolliertes, gemächliches Absenken des Endeffektors und eines optional daran angeordneten Gegenstandes zu ermöglichen. Auf diese Weise ist ein Sicherungsmechanismus geschaffen, der das Risiko eines unkontrollierten Herabfallens eines gegriffenen Gegenstands und ein damit verbundenes Verletzungsrisiko für eine Bedienperson reduziert.

Bei der Auslösebedingung kann es sich um eine Unterbrechung, insbesondere einen Ausfall, einer elektrischen Energieversorgung der Sicherheitskupplung handeln. Bei der Auslösebedingung kann es sich auch um eine Unterbrechung, insbesondere einen Ausfall, einer optionalen Druckluftversorgung der Sicherheitskupplung handeln. Bei der Auslösebedingung kann es sich auch um eine Unterbrechung, insbesondere einen Ausfall, einer optionalen Unterdruckversorgung der Sicherheitskupplung handeln, bspw. in Folge eines Defektes oder eines Stromausfalls an einer Unterdruckversorgungseinrichtung. Bei der Auslösebedingung kann es sich auch um das Unter- oder Überschreiten eines Schwellwerts einer Leckage in einem mit der Sicherheitskupplung verbundenen Endeffektors handeln. Bei der Auslösebedingung kann es sich auch um das Unter- oder Überschreiten eines Schwellwerts eines Unterdrucks handeln, welcher an der Sicherheitskupplung oder an einem mit der Sicherheitskupplung verbundenen Endeffektors anliegt.

Es ist auch denkbar, dass die Sicherungseinrichtung derart ausgebildet ist, dass sie durch Betätigen eines Notschalters durch eine Bedienperson aus der Normalkonfiguration in die Notkonfiguration überführbar ist. Beispielsweise ist es denkbar, dass die Sicherungseinrichtung über eine kabelgebundene oder kabellose Datenverbindung mit einem Notschalter oder einer Steuereinrichtung verbunden ist und über diese manuell aus der Normalkonfiguration in die Notkonfiguration überführbar ist.

Es ist auch denkbar, dass die Sicherheitskupplung eine Empfängereinrichtung zum Empfang eines Notsignals umfasst. Dann kann die Auslösebedingung auch das Empfangen eines Notsignals durch die Empfängereinrichtung der Sicherheitskupplung sein. Die Empfängereinrichtung kann in der Sicherheitskupplung selbst integriert sein. Die Empfängereinrichtung kann auch extern vorgesehen sein, beispielsweise als Teil einer die Sicherheitskupplung umfassenden Handhabungsanlage. Bei der Empfängereinrichtung kann es sich beispielsweise um eine Funkantenne handeln. Eine solche Ausgestaltung ermöglicht es beispielsweise, dass ein Bedienperson per Funk das Absenken des Greifers mit der Last auslösen kann.

Wie nachfolgend noch im Detail erläutert, kann die Sicherheitskupplung je nach Auslösebedingung unterschiedlich ausgebildet sein.

Die Verbindungseinrichtung kann eine Seilverbindung umfassen. Insbesondere kann die Seilverbindung eine mechanische oder fluidisch gebremste Seilrolle und/oder ein reibungsbehaftet gebremstes Seil umfassen. Beispielsweise ist es denkbar, dass die Seilrolle mit dem Manipulator-Kupplungsabschnitt verbunden ist, und der Endeffektor-Kupplungsabschnitt mit dem Seil, insbesondere einem Seilende, verbunden ist. Eine solche Ausgestaltung ermöglicht einen besonders kompakten und kostengünstigen Aufbau der Verbindungseinrichtung.

Alternativ oder zusätzlich kann die Verbindungseinrichtung eine Teleskopstange umfassen, welche an einem Ende mit dem Manipulator Kupplungsabschnitt und an dem anderen Ende mit dem Endeffektor-Kupplungsabschnitt verbunden ist. Die Teleskopstange kann insbesondere mechanisch oder fluidisch gebremst sein und somit ein kontrolliertes Absenken des Endeffektor-Kupplungsabschnitts relativ zu dem Manipulator-Kupplungsabschnitt ermöglichen. Eine Ausgestaltung mit Teleskopstange ermöglicht es, auch in einer ausgefahrenen oder teilweise ausgefahrenen Konfiguration der Verbindungseinrichtung Querkräfte zwischen Endeffektor-Kupplungsabschnitt und Manipulator-Kupplungsabschnitt zu übertragen. Auf diese Weise kann ein unkontrolliertes Schwingen des Endeffektors bzw. des Gegenstands während des Absenkens vermieden werden.

Alternativ oder zusätzlich kann die Verbindungseinrichtung eine gedämpfte Feder, insbesondere Spiralfeder, umfassen. Insbesondere kann die Feder an einem Ende mit dem Manipulator Kupplungsabschnitt und an dem anderen Ende mit dem Endeffektor-Kupplungsabschnitt verbunden sein.

Alternativ oder zusätzlich kann die Verbindungseinrichtung einen mit Unterdruck beaufschlagbaren Hubschlauch aufweisen. Insbesondere kann der Hubschlauch an einem Ende mit dem Manipulator-Kupplungsabschnitt und an dem anderen Ende mit dem Endeffektor-Kupplungsabschnitt verbunden sein. Der Hubschlauch kann beispielweise derart ausgebildet sein, dass der Hubschlauch in der Notkonfiguration über ein Drosselventil belüftet und somit kontrolliert verlängert werden kann. Die Sicherungseinrichtung kann insofern dazu ausgebildet sein, das Drosselventil zu steuern.

Alternativ oder zusätzlich kann die Verbindungseinrichtung einen fluidisch gebremsten, insbesondere luftgebremsten, Kolben aufweisen. Beispielsweise kann der Kolben in einem Zylinder verlagerbar sein unter Verdrängung von Fluid, insbesondere Luft, aus dem Zylinder. Dann kann eine Bremswirkung beispielsweise dadurch bereitgestellt sein, dass das Fluid durch eine Drossel aus dem Zylinder entweicht. Die Drossel kann insbesondere derart ausgebildet sein, dass ein Strömungswiderstand verstellbar, insbesondere einstellbar, ist. Dies ermöglicht es, eine Bremswirkung bspw. in Abhängigkeit eines Gewichts des Endeffektors und/oder eines daran gehaltenen Gegenstands variabel einzustellen.

Im Rahmen einer vorteilhaften Ausgestaltung kann die Sicherungseinrichtung derart ausgebildet sein, dass sie den Manipulator-Kupplungsabschnitt und den Endeffektor-Kupplungsabschnitts in der Normalkonfiguration in festem Abstand zueinander fixiert. Dann kann die Absenkeinrichtung in der Normalkonfiguration dadurch blockiert sein, dass der Manipulator-Kupplungsabschnitt und der Endeffektor-Kupplungsabschnitt durch die Sicherungseinrichtung zusammengehalten sind. Eine solche Ausgestaltung hat den zusätzlichen Vorteil, dass ein an dem Endeffektor-Kupplungsabschnitt gehaltener Endeffektor sowie ein optional an dem Endeffektor gehaltener Gegenstand sicher und in definierter Position an dem Manipulator befestigbar sind, was eine präzise und wiederholgenaue Verlagerung des Endeffektors durch den Manipulator ermöglicht. Die Sicherungseinrichtung kann insbesondere dazu ausgebildet sein, den Manipulator-Kupplungsabschnitt und den Endeffektor-Kupplungsabschnitt in der Normalkonfiguration mechanisch, insbesondere formund/oder kraftschlüssig, magnetisch und/oder mittels Unterdruck zu fixieren.

Beispielsweise kann die Sicherungseinrichtung einen aktuierbaren Permanentmagnet oder einen Elektromagnet umfassen, mittels welchem der Manipulator-Kupplungsabschnitt und der Endeffektor-Kupplungsabschnitt in festem Abstand zueinander fixierbar sind. Insbesondere kann die Sicherungseinrichtung derart ausgebildet sein, dass die Sicherungseinrichtung bei Aktuierung des Permanentmagneten oder des Elektromagneten den Manipulator-Kupplungsabschnitt und den Endeffektor-Kupplungsabschnitt miteinander verbindet (Normalkonfiguration der Sicherungseinrichtung) und bei Wegfall der Aktuierung (z.B. in Folge einer Unterbrechung der elektrischen Energieversorgung) diese Verbindung gelöst ist. Beispielsweise ist es denkbar, dass die Sicherungseinrichtung einen oder mehrere Verbindungsarme aufweist, welcher schwenkbar an dem Manipulator-Kupplungsabschnitt oder dem Endeffektor-Kupplungsabschnitt gehaltert ist, und an dessen freiem Ende ein aktuierbarer Permanentmagnet oder ein Elektromagnet vorgesehen ist. Eine Ausgestaltung der Sicherungseinrichtung mit aktuierbarem Permanentmagnet oder Elektromagnet ist insbesondere vorteilhaft, um eine Unterbrechung, insbesondere einen Ausfall, einer elektrischen Energieversorgung zu adressieren, da bei Ausfall der Energieversorgung eine Magnetwirkung automatisch nachlässt. Der Permanentmagnet oder der Elektromagnet bilden insofern sowohl einen Auslösemechanismus als auch eine Feststelleinrichtung der Sicherungseinrichtung. Es sind somit keine zusätzlichen Steuerungsmechanismen, bspw. Sensoren oder Schalter, erforderlich, was einen kompakten und kostengünstigen Aufbau der Sicherheitskupplung ermöglicht. Es ist aber z.B. auch denkbar, dass die Auslösebedingung eine Unterbrechung einer Druckluft- oder Unterdruckversorgung ist und in Folge dessen ein separater Auslösemechanismus eine Stromzufuhr zu dem Permanentmagnet oder dem Elektromagnet unterbricht.

Die Sicherungseinrichtung kann auch ein oder mehrere Stellglieder umfassen, welches zwischen einer ersten Schaltstellung und einer zweiten Schaltstellung überführbar, insbesondere verlagerbar ist. Das mindestens eine Stellglied kann derart ausgebildet sein, dass es sich in der Normalkonfiguration der Sicherungseinrichtung in der ersten Schaltstellung (Normalkonfiguration des Stellglieds) befindet und bei Auftreten der Auslösebedingung selbsttätig in die zweite Schaltstellung (Notkonfiguration des Stellglieds) überführt wird.

Wie nachfolgend noch im Detail erläutert, kann das wenigstens eine Stellglied einen Auslösemechanismus zum Betätigen einer die Absenkeinrichtung wahlweise blockierende oder freigebenden Feststelleinrichtung bilden. Es ist aber auch denkbar, dass das Stellglied selbst eine Feststelleinrichtung zum blockierende Absenkeinrichtung bildet.

Im Rahmen einer vorteilhaften Weiterbildung kann das wenigstens eine Stellglied einen Draht oder Stab aus einem Formgedächtnismaterial umfassen. Solche Drähte aus Formgedächtnismaterialien haben die Eigenschaft, sich aus einem vorgedehnten Zustand unter Wärmeeinfluss sehr schnell auf eine ursprüngliche Ausgangsform zusammenzuziehen. Die hierfür erforderliche Wärme kann insbesondere durch eine Heizwirkung beim Bestromen des Formgedächtnisdrahtes bereitgestellt werden. Im vorliegenden Zusammenhang kann der Formgedächtnisdraht insofern insbesondere derart ausgebildet sein, dass er sich bei Auftreten der Auslösebedingungen selbsttätig zusammenzieht. Im Konkreten ist es beispielsweise denkbar, dass der Formgedächtnisdraht in einer Normalkonfiguration eine gedehnte Konfiguration aufweist (Normalkonfiguration des Stellglieds), und bei Auftreten der Auslösebedingung derart bestromt wird, dass er selbsttätig in eine ungedehnte Ausgangskonfiguration (Notkonfiguration des Stellglieds) überführt wird. Die hierbei auftretende Längenänderung des Formgedächtnisdrahtes kann dann bspw. als Auslösemechanismus zum Betätigen einer die Absenkeinrichtung wahlweise blockierenden oder freigebenden Feststelleinrichtung dienen. Der Draht oder Stab kann insofern ein mechanischer Auslösemechanismus sein. Um den Formgedächtnisdraht im Notfall besonders schnell bestromen zu können, kann es vorteilhaft sein, wenn ein Energiespeicher, vorzugsweise umfassend einen Kondensator, vorgesehen ist.

Es ist auch denkbar, dass es sich bei dem Stellglied um einen aktuierbaren, insbesondere pneumatisch aktuierbaren, Betätigungskolben handelt, welcher zwischen einer ersten und einer zweiten Schaltstellung verlagerbar ist. Insbesondere ist der Betätigungskolben in Richtung der zweiten Schaltstellung beaufschlagt, vorzugsweise federvorgespannt. Beispielsweise kann es sich bei dem Stellglied um einen Pneumatikzylinder handeln. Ein solcher Pneumatikzylinder ist konstruktiv einfach realisierbar und robust in der Funktion, was für die angedachten Sicherheitsanwendungen vorteilhaft ist.

Insbesondere kann der Betätigungskolben derart ausgebildet sein, dass er sich bei Aktuierung, insbesondere bei Beaufschlagung mit Druckluft, entgegen der Beaufschlagung bzw. Federvorspannung in der ersten Schaltstellung befindet (Normalkonfiguration) und bei einer Unterbrechung, insbesondere bei Ausfall, Wegfall, der Aktuierung, insbesondere bei Unterbrechung, insbesondere Wegfall, einer Druckluftversorgung (Auslösebedingung) durch die Federvorspannung selbsttätig in die zweite Schaltstellung (Notkonfiguration) überführt wird. Eine solche Ausgestaltung mit pneumatisch aktuierbarem Betätigungskolben ist insbesondere vorteilhaft, um eine Unterbrechung einer Druckluftversorgung der Sicherheitskupplung und/oder eine Unterbrechung einer Unterdruckversorgung der Sicherheitskupplung zu addressieren, da bei Ausfall der Druckluftversorgung der Zylinder automatisch in die Notkonfiguration (zweite Schaltstellung) überführt wird und somit automatisch der Absenkmechanismus freigegeben wird. Es sind somit keine zusätzlichen Steuerungsmechanismen, bspw. Sensoren oder Schalter, erforderlich, was einen kompakten und kostengünstigen Aufbau der Sicherheitskupplung ermöglicht. Es ist auch denkbar, dass die Sicherheitskupplung eine Ventilvorrichtung umfasst, welche bei Ausfall einer elektrischen Energieversorgung den Betätigungsbolzen von einer Druckluftversorgung trennt, also eine Aktuierung des Betätigungskolbens unterbricht.

Wie vorstehend erwähnt, ist es denkbar, dass das Stellglied einen Auslösemechanismus der Sicherungseinrichtung und gleichzeitig eine Feststelleinrichtung zur Verbindung des Manipulator-Kupplungsabschnitts und des Endeffektor-Kupplungsabschnitts bildet. Beispielsweise ist es denkbar, dass der Betätigungskolben in der ersten Schaltstellung (Normalkonfiguration) mit dem Manipulator-Kupplungsabschnitt und dem Endeffektor-Kupplungsabschnitt derart zusammenwirkt, dass der Manipulator-Kupplungsabschnitt und der Endeffektor-Kupplungsabschnitt in festem Abstand zueinander fixiert sind. Es ist beispielsweise denkbar, dass der Betätigungskolben bzw. ein Zylinderbolzen des Betätigungskolbens in der ersten Schaltstellung in entsprechende Verbindungslöcher an dem Manipulator-Kupplungsabschnitt und dem Endeffektor-Kupplungsabschnitt eingreift und die Kupplungsabschnitt somit verbindet. In der zweiten Schaltstellung kann der Betätigungskolben dann aus den Verbindungslöchern herausgezogen sein.

Es ist auch möglich, dass das Stellglied lediglich den Auslösemechanismus zur Aktivierung einer zusätzlichen Feststelleinrichtung bildet. Beispielsweise kann die Sicherungseinrichtung eine Feststelleinrichtung umfassen, welche eine Schließkonfiguration und eine Freigabekonfiguration einnehmen kann, wobei die Feststelleinrichtung in der Schließkonfiguration den Manipulator-Kupplungsabschnitt und den Endeffektor-Kupplungsabschnitt in festem Abstand zueinander fixiert (Normalkonfiguration der Sicherungseinrichtung) und wobei in der Freigabekonfiguration der Feststelleinrichtung (Notkonfiguration der Sicherungseinrichtung) eine solche Fixierung gelöst ist. Dann kann die Feststelleinrichtung mit dem Stellglied derart zusammenwirken, insbesondere durch das Stellglied, beispielsweise den vorstehend beschriebenen Betätigungskolben oder den Formgedächtnisdraht, derart aktuierbar sein, dass durch Überführen des Stellglieds aus der ersten Schaltstellung in die zweite Schaltstellung die Feststelleinrichtung aus der Schließkonfiguration in die Freigabekonfiguration überführt wird. Insofern können Feststelleinrichtung und Stellglied derart miteinander wechselwirken, dass dann, wenn sich das Stellglied in der ersten Schaltstellung befindet, sich die Feststelleinrichtung in der Schließkonfiguration befindet und dann, wenn sich das Stellglied in der zweiten Schaltstellung befindet, sich die Feststelleinrichtung in der Freigabekonfiguration befindet.

Beispielsweise ist es denkbar, dass die Feststelleinrichtung einen Bolzen umfasst, welche in der Schließkonfiguration in entsprechende Verbindungslöcher an dem Manipulator Kupplungsabschnitt und dem Endeffektor-Kupplungsabschnitt eingreift und in der Freigabekonfiguration aus den Verbindungslöchern herausgezogen ist.

Es ist auch denkbar, dass die Feststelleinrichtung zwei Zahnringe umfasst, welche derart gegeneinander verdrehbar sind, dass sie eine Schließkonfiguration (Normalkonfiguration) und eine Freigabekonfiguration (Notkonfiguration) einnehmen können. Insbesondere können die Zahnringe derart ausgebildet sein, dass sie in der Schließkonfiguration den Manipulator-Kupplungsabschnitt und den Endeffektor-Kupplungsabschnitt miteinander verbinden (und somit die Absenkeinrichtung blockieren) und in der Freigabekonfiguration derart relativ zueinander verschiebbar sind, dass der Manipulator-Kupplungsabschnitt und der Endeffektor-Kupplungsabschnitt relativ zueinander verlagerbar sind (und somit die Absenkeinrichtung freigegeben ist, also ein Absenken des Endeffektor-Kupplungsabschnitts relativ zu dem Manipulator-Kupplungsabschnitt möglich ist).

Im Rahmen eines allgemeinen Aspekts kann die Sicherheitskupplung ein Gehäuse umfassen. Insbesondere kann das Gehäuse zwei- oder mehrteilig aufgebaut sein, mit einem einen ersten Gehäuseabschnitt, welcher mit dem Manipulator-Kupplungsabschnitt verbunden ist, und einem zweiten Gehäuseabschnitt, welcher mit dem Endeffektor-Kupplungsabschnitt verbunden ist. Die Gehäuseabschnitte können vorzugsweise derart ausgebildet sein, dass sie die Absenkeinrichtung, insbesondere die Verbindungseinrichtung, in deren eingefahrenen Konfiguration (Normalkonfiguration) umschließen und beim Ausfahren der Absenkeinrichtung, insbesondere der Verbindungseinrichtung, (Notkonfiguration) voneinander getrennt werden.

Die eingangs gestellte Aufgabe wird auch durch eine Handhabungsanlage gemäß Anspruch 14 gelöst. Die Handhabungsanlage ist insbesondere zum Greifen und Handhaben von Gegenständen ausgebildet. Die Handhabungsanlage umfasst einen Manipulator, insbesondere einen Roboter, und einen Endeffektor, insbesondere eine Unterdruckgreifvorrichtung, vorzugsweise Sauggreifvorrichtung. Die Handhabungsanlage umfasst außerdem eine vorstehend beschriebene Sicherheitskupplung. Der Endeffektor ist mittels der Sicherheitskupplung an dem Manipulator befestigt. Insbesondere ist die Sicherheitskupplung mittels des Manipulator-Kupplungsabschnitts an dem Manipulator befestigt und der Endeffektor ist mittels des Endeffektor-Kupplungsabschnitts an der Sicherheitskupplung befestigt. Die vorstehend in Bezug auf die Sicherheitskupplung als solche erläuterten Vorteile und optionalen Merkmale der Sicherheitskupplung, des Manipulators und des Endeffektors können auch zur Ausgestaltung der Handhabungsanlage gemäß Anspruch 14 dienen, sodass zur Vermeidung von Wiederholungen auf vorstehende Offenbarung verwiesen wird.

Die Erfindung wird im Folgenden anhand der Figuren näher erläutert.

Es zeigen:
- Fig. 1: eine vereinfachte schematische Darstellung einer Handhabungsanlage;
- Fig. 2: eine vereinfachte schematische Darstellung einer Sicherheitskupplung in Normalkonfiguration;
- Fig. 3: eine vereinfachte schematische Darstellung einer Sicherheitskupplung in Notkonfiguration; und
- Fig. 4a-c: vereinfachte schematische Darstellungen der Sicherheitskupplung mit daran angekoppeltem Endeffektor in verschiedenen Betriebszuständen zur Erläuterung der Funktionsweise der Sicherheitskupplung.

In der nachfolgenden Beschreibung sowie in den Figuren sind für identische oder einander entsprechende Merkmale jeweils dieselben Bezugszeichen verwendet.

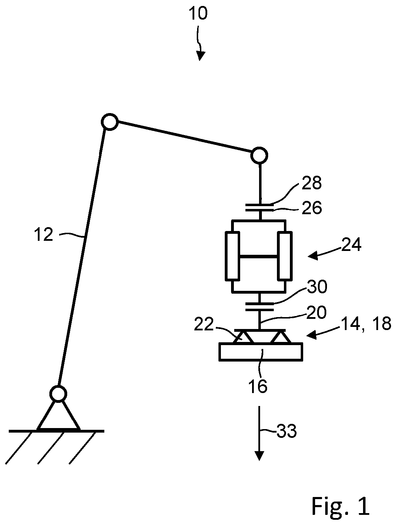

Die Figur 1 zeigt eine Handhabungsanlage, welche insgesamt mit dem Bezugszeichen 10 bezeichnet ist. Die Handhabungsanlage 10 umfasst einen Manipulator 12 und einen Endeffektor 14 zum Greifen eines Gegenstands 16. Bei dem Manipulator 12 kann es sich beispielsweise um einen Roboter, insbesondere Industrieroboter oder Leichtbauroboter handeln.

Der Endeffektor 14 ist in dem dargestellten Beispiel als Sauggreifvorrichtung 18 ausgebildet. Wie in Figur 1 schematisch gezeigt, umfasst die Sauggreifvorrichtung 18 beispielhaft ein Trägergerüst 20, an dem ein oder mehrere, in dem dargestellten Beispiel zwei, Saugkörper 22 zum Ansaugen des Gegenstands 16 angeordnet sind.

Bei nicht dargestellten Ausgestaltungen kann der Endeffektor 14 bspw. auch als mechanischer Greifer oder Magnetgreifer ausgebildet sein.

Die Handhabungsanlage 10 umfasst außerdem eine Sicherheitskupplung 24, mittels welcher der Endeffektor 14 an dem Manipulator 12, insbesondere lösbar, befestigt ist. Wie in Figur 1 dargestellt, ist die Sicherheitskupplung 24 zwischen Manipulator 12 und Endeffektor 14 angeordnet.

Die Sicherheitskupplung 24 umfasst einen Manipulator-Kupplungsabschnitt 26 zur Ankopplung der Sicherheitskupplung 24 an den Manipulator 12. Beispielsweise kann der Manipulator-Kupplungsabschnitt 26 mit einem Verbindungsflansch 28 des Manipulators 12 verschraubt oder über eine Bajonettverbindung verbunden sein.

Die Sicherheitskupplung 24 umfasst außerdem einen dem Manipulator-Kupplungsabschnitt 26 gegenüberliegenden Endeffektor-Kupplungsabschnitt 30 zur Ankopplung des Endeffektors 14 an die Sicherheitskupplung 24 und somit an den Manipulator 12. Der Endeffektor-Kopplungsabschnitt 30 kann beispielsweise eine Schnellwechselkupplung zur lösbaren Ankopplung des Endeffektors 14 umfassen.

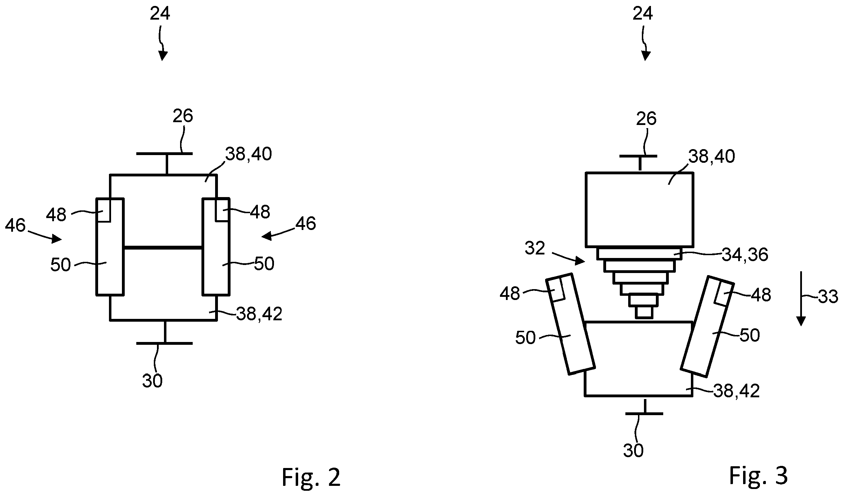

Die Sicherheitskupplung 24 umfasst außerdem eine Absenkeinrichtung 32 (vgl. Fig. 3), welche dazu ausgebildet ist, den Endeffektor-Kupplungsabschnitt 30, den daran angekoppelten Endeffektor 14 und einen optional an dem Endeffektor 14 gehaltenen Gegenstand 16 kontrolliert, insbesondere mit gedrosselter Geschwindigkeit, in Folge der Schwerkraft relativ zu dem Manipulator-Kupplungsabschnitt 26 absinken zu lassen. Eine Wirkrichtung der Schwerkraft ist in den Figuren mit dem Pfeil 33 eingezeichnet.

Die Absenkeinrichtung 32 umfasst eine längenveränderbare Verbindungseinrichtung 34, mittels welcher der Manipulator-Kopplungsabschnitt 26 und der Endeffektor-Kopplungsabschnitt 30 miteinander verbunden sind (vgl. Fig. 3).

In dem dargestellten Beispiel umfasst die Verbindungseinrichtung 34 eine Teleskopstange 36, welche an einem Ende mit dem Manipulator-Kupplungsabschnitt 26 und an dem anderen Ende mit dem Endeffektor-Kupplungsabschnitt 30 verbunden ist.

Die Teleskopstange 36 ist vorzugsweise mechanisch oder fluidisch gebremst, sodass der Endeffektor-Kopplungsabschnitt 30 (zusammen mit einem daran angeordneten Endeffektor 14 und einem wiederum daran gehaltenen Gegenstand 16) kontrolliert der Schwerkraft folgend (vgl. Pfeil 33) absenken kann.

Die Figur 2 zeigt die Sicherheitskupplung 24 mit eingefahrener Absenkeinrichtung 32. Die Figur 3 zeigt die Sicherheitskupplung 24 mit ausgefahrener Absenkeinrichtung 32.

Wie in den Figuren 2 und 3 beispielhaft dargestellt, kann die Sicherheitskupplung 24 ein zwei- oder mehrteiliges Gehäuse 38 umfassen, mit einem einen ersten Gehäuseabschnitt 40, welcher mit dem Manipulator-Kupplungsabschnitt 26 verbunden ist, und einem zweiten Gehäuseabschnitt 42, welcher mit dem Endeffektor-Kupplungsabschnitt 30 verbunden ist. Die Gehäuseabschnitte 40, 42 sind vorzugsweise derart ausgebildet, dass sie die Absenkeinrichtung 32 in deren eingefahrenen Konfiguration (vgl. Fig. 2) umschließen. Dies die Absenkeinrichtung 32 ist dann durch das Gehäuse 38 vor Umgebungseinflüssen geschützt. Beim Ausfahren der Absenkeinrichtung 32 werden die Gehäuseabschnitte 40, 42 dann voneinander getrennt (vgl. Fig. 3).

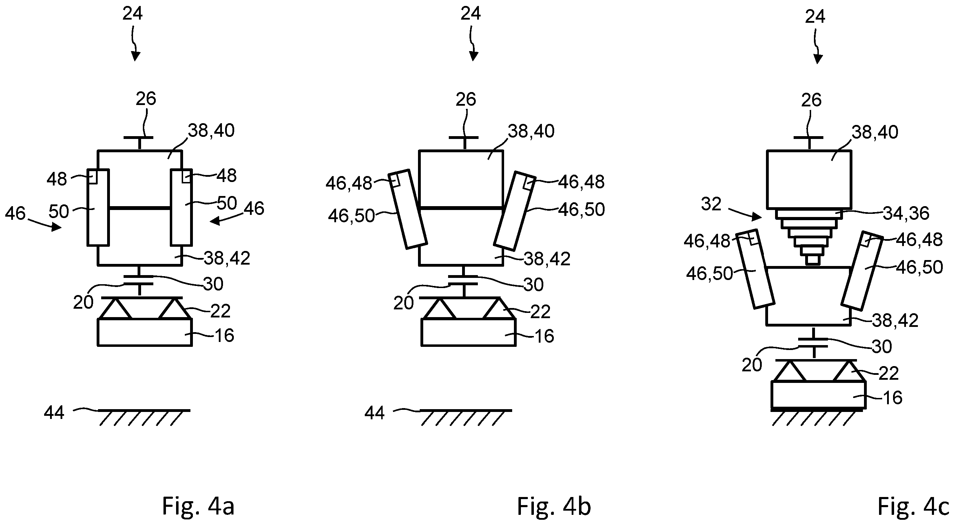

Wie vorstehend erläutert, ist die Absenkeinrichtung 32 dazu vorgesehen, um in einer Notsituation, in welcher ein Prozessablauf der Handhabungsanlage 10 gestört ist (bspw. in Folge eines Ausfalls der elektrischen Energieversorgung), den Endeffektor 14 und einen daran gehaltenen Gegenstand 16 kontrolliert in eine stabile Konfiguration auf einer Abstützung, bspw. auf einen Gebäudeboden 44, absinken zu lassen (vgl. Fig. 4c). Im Normalbetrieb der Handhabungsanlage 10 soll die Absenkeinrichtung 32 jedoch blockiert sein, sodass der Endeffektor-Kopplungsabschnitt 30 und der Manipulator-Kupplungsabschnitt 26 relativ zueinander fixiert sind.

Zu diesem Zweck umfasst die Sicherheitskupplung 24 eine Sicherungseinrichtung 46 (in den Figuren lediglich schematisch dargestellt), welche eine in Fig. 2 und 4a dargestellte Normalkonfiguration und eine in Fig. 3, 4b, und 4c dargestellte Notkonfiguration einnehmen kann.

In der Normalkonfiguration ist die Sicherungseinrichtung 46 derart konfiguriert, dass sie den Endeffektor-Kupplungsabschnitt 30 und den Manipulator-Kupplungsabschnitt 26 in festem Abstand zueinander derart fixiert, dass Absenkeinrichtung 32 blockiert ist, also ein Ausfahren der Teleskopstange 36 nicht möglich ist (vgl. Fig. 2). In der Notkonfiguration ist die Sicherungseinrichtung 46 hingegen derart konfiguriert, dass eine Fixierung des Endeffektor-Kupplungsabschnitts 30 und des Manipulator-Kupplungsabschnitts 26 durch die Sicherungseinrichtung 46 gelöst ist, sodass die Absenkeinrichtung 32 freigegeben ist (vgl. Fig. 3).

Die Sicherungseinrichtung 46 ist vorzugsweise derart ausgebildet, dass sie bei Auftreten einer vorbestimmten Auslösebedingung selbsttätig aus der Normalkonfiguration (vgl. Fig. 2) in die Notkonfiguration (vgl. Fig. 3) wechselt. Bei der Auslösebedingungen kann es sich beispielsweise um eine Unterbrechung einer elektrischen Energieversorgung der Sicherheitskupplung 24, eine Unterbrechung einer Druckluftversorgung der Sicherheitskupplung 34, eine Unterbrechung einer Unterdruckversorgung der Sicherheitskupplung 24, ein Überschreiten eines Schwellwerts einer Leckage in dem Endeffektor 14, ein Unter- oder Überschreiten eines Schwellwerts eines an der Sicherheitskupplung 24 anliegenden Unterdrucks, oder das Empfangen eines Notsignals durch eine optionale Empfängereinrichtung (nicht dargestellt) der Sicherheitskupplung 24 handeln.

Wie vorstehend erläutert, sind verschiedene Ausgestaltungen der Sicherungseinrichtung 46 möglich. In den Figuren ist beispielhaft eine Ausgestaltung der Sicherungseinrichtung 46 mit Elektromagneten 48 dargestellt. Wie nachfolgend im Detail erläutert, sind die Elektromagneten 48 dazu ausgebildet, bei Aktuierung den Manipulator-Kupplungsabschnitt 26 und den Endeffektor-Kupplungsabschnitt 30 durch Magnetkraft miteinander zu verbinden (Normalkonfiguration der Sicherungseinrichtung 46) und bei Wegfall der Aktuierung (z.B. in Folge einer Unterbrechung der elektrischen Energieversorgung der Elektromagneten 48) eine Verlagerung des Endeffektor-Kupplungsabschnitts 30 relativ zu dem Manipulator-Kupplungsabschnitt 26 freizugeben.

Im konkreten Beispiel umfasst die Sicherungseinrichtung 46 zwei Verbindungsarme 50, welche jeweils schwenkbar an dem mit dem Endeffektor-Kupplungsabschnitt 30 verbundenen zweiten Gehäuseabschnitt 42 gehaltert sind und an dessen freien Ende jeweils ein Elektromagnet 48 vorgesehen ist. Im aktuierten Zustand der Elektromagneten 48 (vgl. Fig. 2 und 4a) sind der erste Gehäuseabschnitt 40 und der zweite Gehäuseabschnitt 42 durch die magnetische Haltekraft der Elektromagnete 48 miteinander verbunden. Bei Unterbrechung der elektrischen Energieversorgung der Elektromagnete 48 (z.B. in Folge eines Stromausfalls) und dem damit verbundenen Wegfall der magnetischen Haltekraft, wird eine Fixierung von Endeffektor-Kupplungsabschnitt 30 und Manipulator-Kupplungsabschnitt 26 gelöst (vgl. Fig. 4b). Insbesondere können die Verbindungsarme 50 von ihrer Anlage an dem ersten Gehäuseabschnitt 40 wegklappen (vgl. Fig. 4b). In Folge dessen ist die Absenkeinrichtung 32 freigegeben und der Endeffektor 14 kann gemeinsam mit dem Gegenstand 16 schwerkraftbedingt absinken, insbesondere bis der Gegenstand 16 in sicherer Position auf dem Boden 44 angekommen ist. Auf diese Weise ist ein selbsttätiger Sicherungsmechanismus geschaffen, der es ermöglicht, bei Ausfall einer elektrischen Energieversorgung einen an dem Endeffektor 14 gehaltenen Gegenstand 16 in eine stabile Konfiguration zu überführen.

## Patentansprüche

1. Sicherheitskupplung (24) zur Anbindung eines Endeffektors (14) an einen Manipulator (12), umfassend:
- einen Manipulator-Kupplungsabschnitt (26) zur Verbindung der Sicherheitskupplung (24) mit dem Manipulator (12);
- einen Endeffektor-Kupplungsabschnitt (30) zur Verbindung der Sicherheitskupplung (24) mit dem Endeffektor (14);
- eine Absenkeinrichtung (32), welche den Manipulator-Kupplungsabschnitt (26) und den Endeffektor-Kupplungsabschnitt (30) derart miteinander verbindet, dass der Endeffektor-Kupplungsabschnitt (30) und ein optional daran angekoppelter Endeffektor (14) kontrolliert, insbesondere selbsttätig gebremst, in Folge der Schwerkraft relativ zu dem Manipulator-Kupplungsabschnitt (26) absinken können;
- eine Sicherungseinrichtung (46), welche eine Normalkonfiguration und eine Notkonfiguration einnehmen kann, wobei die Sicherungseinrichtung (46) in der Normalkonfiguration die Absenkeinrichtung (32) blockiert und in der Notkonfiguration die Absenkeinrichtung (32) freigibt
**dadurch gekennzeichnet, dass** die Absenkeinrichtung (32) eine längenveränderbare Verbindungseinrichtung (34) umfasst, welche den Manipulator-Kupplungsabschnitt (26) und den Endeffektor-Kupplungsabschnitt (30) miteinander verbindet.

2. Sicherheitskupplung (24) nach Anspruch 1, wobei die Sicherungseinrichtung (46) derart ausgebildet ist, insbesondere einen Auslösemechanismus derart aufweist, dass die Sicherungseinrichtung (46) bei Auftreten einer vorbestimmten Auslösebedingung selbsttätig aus der Normalkonfiguration in die Notkonfiguration wechselt.

3. Sicherheitskupplung (24) nach Anspruch 2, wobei es sich bei der Auslösebedingung um eine oder mehrere der folgenden Bedingungen handelt:
a. Unterbrechung einer elektrischen Energieversorgung der Sicherheitskupplung;
b. Unterbrechung einer Druckluftversorgung der Sicherheitskupplung;
c. Unterbrechung einer Unterdruckversorgung der Sicherheitskupplung;
d. Überschreiten eines Schwellwerts einer Leckage in einem mit der Sicherheitskupplung verbundenen Endeffektor;
e. Unter- oder Überschreiten eines Schwellwerts eines an der Sicherheitskupplung anliegenden Unterdrucks;
f. Empfangen eines Notsignals durch eine Empfängereinrichtung der Sicherheitskupplung.

4. Sicherheitskupplung (24) nach einem der vorherigen Ansprüche, wobei die Verbindungseinrichtung (34) eine oder mehrere der folgenden Einrichtungen umfasst:
a. eine Seilverbindung, umfassend eine mechanisch oder fluidisch gebremste Seilrolle und/oder ein reibungsbehaftet gebremstes Seil;
b. eine mechanisch oder fluidisch gebremste Teleskopstange (36), welche an einem Ende mit dem Manipulator-Kupplungsabschnitt (26) und an dem anderen Ende mit dem Endeffektor-Kupplungsabschnitt (30) verbunden ist;
c. eine gedämpfte Feder, insbesondere Spiralfeder, welche an einem Ende mit dem Manipulator-Kupplungsabschnitt (26) und an dem anderen Ende mit dem Endeffektor-Kupplungsabschnitt (30) verbunden ist;
d. einen mit Unterdruck beaufschlagbaren Hubschlauch, welcher an einem Ende mit dem Manipulator-Kupplungsabschnitt (26) und an dem anderen Ende mit dem Endeffektor-Kupplungsabschnitt (30) verbunden ist;
e. einen fluidisch gebremsten, insbesondere luftgebremsten, Kolben.

5. Sicherheitskupplung (24) nach einem der vorherigen Ansprüche, wobei die Sicherungseinrichtung (46) den Manipulator-Kupplungsabschnitt (26) und den Endeffektor-Kupplungsabschnitt (30) in der Normalkonfiguration in festem Abstand zueinander fixiert, insbesondere mechanisch, weiter insbesondere form-, reib- und/oder kraftschlüssig, magnetisch und/oder mittels Unterdruck.

6. Sicherheitskupplung (24) nach einem der vorherigen Ansprüche, wobei die Sicherungseinrichtung (46) einen aktuierbaren Permanentmagnet oder einen Elektromagnet (48) umfasst, insbesondere mittels welchem der Manipulator-Kupplungsabschnitt (26) und der Endeffektor-Kupplungsabschnitt (30) in festem Abstand zueinander fixierbar sind.

7. Sicherheitskupplung (24) nach einem der Ansprüche 2 bis **6,** wobei die Sicherungseinrichtung (46) ein Stellglied umfasst, welches zwischen einer ersten Schaltstellung und einer zweiten Schaltstellung verlagerbar ist, wobei das Stellglied derart ausgebildet ist, dass es sich in der Normalkonfiguration der Sicherungseinrichtung (46) in der ersten Schaltstellung befindet und bei Auftreten der Auslösebedingung selbsttätig in die zweite Schaltstellung überführt wird.

8. Sicherheitskupplung (24) nach Anspruch 7, wobei das Stellglied einen Draht oder Stab aus einem Formgedächtnismaterial umfasst.

9. Sicherheitskupplung (24) nach Anspruch 7, wobei das Stellglied ein, insbesondere pneumatisch, aktuierbarer, federvorgespannter Betätigungskolben ist.

10. Sicherheitskupplung (24) nach dem vorherigen Anspruch, wobei der Betätigungskolben derart ausgebildet ist, dass er sich bei Aktuierung, insbesondere bei Beaufschlagung mit Druckluft, entgegen der Federvorspannung in der ersten Schaltstellung befindet und bei Unterbrechung der Aktuierung, insbesondere bei Unterbrechung einer Druckluftversorgung, durch die Federvorspannung selbsttätig in die zweite Schaltstellung überführt wird.

11. Sicherheitskupplung (24) nach dem vorherigen Anspruch, wobei der Betätigungskolben in der ersten Schaltstellung mit dem Manipulator-Kupplungsabschnitt (26) und dem Endeffektor-Kupplungsabschnitt (30) derart zusammenwirkt, dass der Manipulator-Kupplungsabschnitt (26) und der Endeffektor-Kupplungsabschnitt (30) durch den Betätigungskolben in festem Abstand zueinander fixiert sind.

12. Sicherheitskupplung (24) nach einem der Ansprüche 7 bis 10, wobei die Sicherungseinrichtung (46) eine Feststelleinrichtung umfasst, welche eine Schließkonfiguration und eine Freigabekonfiguration einnehmen kann, wobei die Feststelleinrichtung in der Schließkonfiguration den Manipulator-Kupplungsabschnitt (26) und den Endeffektor-Kupplungsabschnitt (30) in festem Abstand zueinander fixiert und diese Fixierung in der Freigabekonfiguration gelöst ist, wobei die Feststelleinrichtung mit dem Stellglied derart zusammenwirkt, dass durch Überführung des Stellglieds aus der ersten Schaltstellung in die zweite Schalstellung die Feststelleinrichtung aus der Schließkonfiguration in die Freigabekonfiguration überführbar ist.

13. Sicherheitskupplung (24) nach dem vorherigen Anspruch, wobei die Feststelleinrichtung zwei Zahnringe umfasst, welche derart gegeneinander verdrehbar sind, dass sie eine Schließkonfiguration und eine Freigabekonfiguration einnehmen können, wobei die Zahnringe in der Schließkonfiguration den Manipulator-Kupplungsabschnitt (26) und den Endeffektor-Kupplungsabschnitt (30) miteinander verbinden und wobei die Zahnringe in der Freigabekonfiguration derart relativ zueinander verschiebbar sind, dass der Manipulator-Kupplungsabschnitt (26) und der Endeffektor-Kupplungsabschnitt (30) relativ zueinander verlagerbar sind.

14. Handhabungsanlage (10), umfassend einen Manipulator (12), einen Endeffektor (14), und eine Sicherheitskupplung (24) nach einem der vorherigen Ansprüche, wobei der Endeffektor (14) mittels der Sicherheitskupplung (24) an dem Manipulator (12) befestigt ist.

## Claims

1. Safety coupling (24) for connecting an end effector (14) to a manipulator (12), comprising:
- a manipulator coupling portion (26) for connecting the safety coupling (24) to the manipulator (12);
- an end effector coupling portion (30) for connecting the safety coupling (24) to the end effector (14);
- a lowering device (32) which connects the manipulator coupling portion (26) and the end effector coupling portion (30) to one another in such a way that the end effector coupling portion (30) and an end effector (14) optionally coupled to the end effector coupling portion can descend relative to the manipulator coupling portion (26), with control, in particular with automatic braking, as a result of gravity;
- a securing device (46) which can assume a normal configuration and an emergency configuration, the securing device (46) blocking the lowering device (32) when the securing device is in the normal configuration and releasing the lowering device (32) when the securing device is in the emergency configuration,
**characterized in that** the lowering device (32) comprises a length-adjustable connection device (34) which connects the manipulator coupling portion (26) and the end effector coupling portion (30) to one another.

2. Safety coupling (24) according to claim 1, wherein the securing device (46) is designed in such a way that, in particular has a trigger mechanism in such a way that, the securing device (46) automatically switches from the normal configuration into the emergency configuration when a predefined triggering condition occurs.

3. Safety coupling (24) according to claim 2, wherein the triggering condition is one or more of the following conditions:
a. interruption of an electrical power supply to the safety coupling;
b. interruption of a compressed-air supply to the safety coupling;
c. interruption of a negative-pressure supply to the safety coupling;
d. exceeding of a threshold value of a leakage in an end effector connected to the safety coupling;
e. undershooting or exceeding of a threshold value of a negative pressure applied to the safety coupling;
f. receiving of an emergency signal by a receiving device of the safety coupling.

4. Safety coupling (24) according to any of the preceding claims, wherein the connection device (34) comprises one or more of the following devices:
a. a cable connection which comprises a mechanically or fluidically braked cable pulley and/or a frictionally braked cable;
b. a mechanically or fluidically braked telescopic rod (36) which is connected, at one end, to the manipulator coupling portion (26) and, at the other end, to the end effector coupling portion (30);
c. a damped spring, in particular a spiral spring, which is connected, at one end, to the manipulator coupling portion (26) and, at the other end, to the end effector coupling portion (30);
d. a lifting tube to which negative pressure can be applied and which is connected, at one end, to the manipulator coupling portion (26) and, at the other end, to the end effector coupling portion (30);
e. a fluidically braked, in particular air-braked, piston.

5. Safety coupling (24) according to any of the preceding claims, wherein the securing device (46) fixes the manipulator coupling portion (26) and the end effector coupling portion (30) at a fixed distance from one another, in particular mechanically, further in particular with form closure, friction closure and/or force closure, magnetically and/or by means of negative pressure, when the securing device is in the normal configuration.

6. Safety coupling (24) according to any of the preceding claims, wherein the securing device (46) comprises an actuatable permanent magnet or an electromagnet (48), in particular by means of which the manipulator coupling portion (26) and the end effector coupling portion (30) can be fixed at a fixed distance from one another.

7. Safety coupling (24) according to any of claims 2 to 6, wherein the securing device (46) comprises an actuating element which can be moved between a first switching position and a second switching position, wherein the actuating element is designed in such a way that, in the normal configuration of the securing device (46), the actuating element is in the first switching position and, when the triggering condition occurs, the actuating element is automatically transferred into the second switching position.

8. Safety coupling (24) according to claim 7, wherein the actuating element comprises a wire or bar made of a shape memory material.

9. Safety coupling (24) according to claim 7, wherein the actuating element is an actuatable, in particular pneumatically actuatable, spring-preloaded actuation piston.

10. Safety coupling (24) according to the preceding claim, wherein the actuation piston is designed in such a way that, when the actuation piston is actuated, in particular when compressed air is applied to the actuation piston, against the spring preload, the actuation piston is in the first switching position and, in the event of interruption of the actuation, in particular in the event of interruption of a compressed-air supply, the actuation piston is automatically transferred by the spring preload into the second switching position.

11. Safety coupling (24) according to the preceding claim, wherein, in the first switching position, the actuation piston interacts with the manipulator coupling portion (26) and the end effector coupling portion (30) in such a way that the manipulator coupling portion (26) and the end effector coupling portion (30) are fixed at a fixed distance from one another by the actuation piston.

12. Safety coupling (24) according to any of claims 7 to 10, wherein the securing device (46) comprises a fixing device, which can assume a locking configuration and a release configuration, wherein the fixing device fixes the manipulator coupling portion (26) and the end effector coupling portion (30) at a fixed distance from one another when the fixing device is in the locking configuration and this fixing is released when the fixing device is in the release configuration, and wherein the fixing device interacts with the actuating element in such a way that, by transfer of the actuating element from the first switching position into the second switching position, the fixing device can be transferred from the locking configuration into the release configuration.

13. Safety coupling (24) according to the preceding claim, wherein the fixing device comprises two toothed rings which can be rotated relative to one another in such a way that they can assume a locking configuration and a release configuration, wherein, in the locking configuration, the toothed rings connect the manipulator coupling portion (26) and the end effector coupling portion (30) to one another and wherein, in the release configuration, the toothed rings are displaceable relative to one another in such a way that the manipulator coupling portion (26) and the end effector coupling portion (30) can be moved relative to one another.

14. Handling system (10) comprising a manipulator (12), an end effector (14), and a safety coupling (24) according to any of the preceding claims, wherein the end effector (14) is fastened to the manipulator (12) by means of the safety coupling (24).

## Revendications

1. Accouplement de sécurité (24) permettant de relier un effecteur terminal (14) à un moyen manipulateur (12), comprenant :
- une section d'accouplement pour moyen manipulateur (26) permettant de relier l'accouplement de sécurité (24) au moyen manipulateur (12) ;
- une section d'accouplement pour effecteur terminal (30) permettant de relier l'accouplement de sécurité (24) à l'effecteur terminal (14) ;
- un dispositif d'abaissement (32) qui relie la section d'accouplement pour moyen manipulateur (26) et la section d'accouplement pour effecteur terminal (30) entre elles de telle sorte que la section d'accouplement pour effecteur terminal (30) et un effecteur terminal (14) éventuellement accouplé à celle-ci peuvent être abaissés de manière contrôlée, en particulier de manière autofreinée, sous l'effet de la gravité par rapport à la section d'accouplement pour moyen manipulateur (26) ;
- un dispositif de sécurité (46) qui peut adopter une configuration normale et une configuration d'urgence, dans lequel le dispositif de sécurité (46) bloque le dispositif d'abaissement (32) dans la configuration normale et libère le dispositif d'abaissement (32) dans la configuration d'urgence,
**caractérisé en ce que** le dispositif d'abaissement (32) comprend un dispositif de liaison (34) variable en longueur qui relie la section d'accouplement pour moyen manipulateur (26) et la section d'accouplement pour effecteur terminal (30).

2. Accouplement de sécurité (24) selon la revendication 1, dans lequel le dispositif de sécurité (46) est conçu, en particulier présente un mécanisme de déclenchement, de telle sorte que le dispositif de sécurité (46) passe automatiquement de la configuration normale à la configuration d'urgence lorsqu'une condition de déclenchement prédéterminée se produit.

3. Accouplement de sécurité (24) selon la revendication 2, dans lequel la condition de déclenchement est l'une ou plusieurs des conditions suivantes :
a. interruption d'une alimentation en énergie électrique de l'accouplement de sécurité ;
b. interruption d'une alimentation en air comprimé de l'accouplement de sécurité ;
c. interruption d'une alimentation en dépression de l'accouplement de sécurité ;
d. dépassement d'une valeur seuil d'une fuite dans un effecteur terminal relié à l'accouplement de sécurité ;
e. dépassement par le bas ou par le haut d'une valeur seuil d'une dépression appliquée à l'accouplement de sécurité ;
f. réception d'un signal d'urgence par un dispositif de réception de l'accouplement de sécurité.

4. Accouplement de sécurité (24) selon l'une des revendications précédentes, dans lequel le dispositif de liaison (34) comprend un ou plusieurs des dispositifs suivants :
a. un moyen de liaison par câble, comprenant une poulie freinée mécaniquement ou par un fluide et/ou un câble freiné par friction ;
b. une tige télescopique (36) freinée mécaniquement ou par un fluide et reliée à une extrémité à la section d'accouplement pour moyen manipulateur (26) et à l'autre extrémité à la section d'accouplement pour effecteur terminal (30) ;
c. un ressort amorti, en particulier un ressort en spirale, qui est relié à une extrémité à la section d'accouplement pour moyen manipulateur (26) et à l'autre extrémité à la section d'accouplement pour effecteur terminal (30) ;
d. un tuyau de levage pouvant être soumis à une dépression et relié à une extrémité à la section d'accouplement pour moyen manipulateur (26) et à l'autre extrémité à la section d'accouplement pour effecteur terminal (30) ;
e. un piston freiné par un fluide, en particulier freiné par de l'air.

5. Accouplement de sécurité (24) selon l'une des revendications précédentes, dans lequel le dispositif de sécurité (46) fixe la section d'accouplement pour moyen manipulateur (26) et la section d'accouplement pour effecteur terminal (30) à une distance fixe l'une par rapport à l'autre dans la configuration normale, en particulier mécaniquement, en particulier par complémentarité de forme, par friction et/ou par force, magnétiquement et/ou par dépression.

6. Accouplement de sécurité (24) selon l'une des revendications précédentes, dans lequel le dispositif de sécurité (46) comprend un aimant permanent actionnable ou un électroaimant (48), en particulier au moyen duquel la section d'accouplement pour moyen manipulateur (26) et la section d'accouplement pour effecteur terminal (30) peuvent être fixées à une distance fixe l'une par rapport à l'autre.

7. Accouplement de sécurité (24) selon l'une des revendications 2 à 6, dans lequel le dispositif de sécurité (46) comprend un actionneur qui peut être déplacé entre une première position de commutation et une seconde position de commutation, dans lequel l'actionneur est conçu de telle sorte qu'il se trouve dans la première position de commutation dans la configuration normale du dispositif de sécurité (46) et qu'il est automatiquement transféré dans la seconde position de commutation lorsque la condition de déclenchement se produit.

8. Accouplement de sécurité (24) selon la revendication 7, dans lequel l'actionneur comprend un fil ou une tige en un matériau à mémoire de forme.

9. Accouplement de sécurité (24) selon la revendication 7, dans lequel l'organe de réglage est un piston d'actionnement précontraint élastique et pouvant être actionné, en particulier de manière pneumatique.

10. Accouplement de sécurité (24) selon la revendication précédente, dans lequel le piston d'actionnement est conçu de telle sorte que, lors de l'actionnement, en particulier lors de la sollicitation par de l'air comprimé, il se trouve dans la première position de commutation à l'encontre de la précontrainte élastique et que, lors de l'interruption de l'actionnement, en particulier lors de l'interruption d'une alimentation en air comprimé, il est automatiquement transféré dans la seconde position de commutation par la précontrainte élastique.

11. Accouplement de sécurité (24) selon la revendication précédente, dans lequel, dans la première position de commutation, le piston d'actionnement coopère avec la section d'accouplement pour moyen manipulateur (26) et la section d'accouplement pour effecteur final (30) de telle sorte que la section d'accouplement pour moyen manipulateur (26) et la section d'accouplement pour effecteur final (30) sont fixées à une distance fixe l'une par rapport à l'autre par le piston d'actionnement.

12. Accouplement de sécurité (24) selon l'une des revendications 7 à 10, dans lequel le dispositif de sécurité (46) comprend un dispositif d'arrêt qui peut prendre une configuration de fermeture et une configuration de libération, dans lequel le dispositif d'arrêt fixe, dans la configuration de fermeture, la section d'accouplement pour moyen manipulateur (26) et la section d'accouplement pour effecteur terminal (30) à une distance fixe l'une par rapport à l'autre et ladite fixation est supprimée dans la configuration de libération, dans lequel le dispositif d'arrêt coopère avec l'actionneur de telle sorte que, par le transfert de l'actionneur de la première position de commutation à la seconde position de commutation, le dispositif de blocage peut être transféré de la configuration de fermeture à la configuration de libération.

13. Accouplement de sécurité (24) selon la revendication précédente, dans lequel le dispositif d'arrêt comprend deux anneaux dentés qui peuvent tourner l'un par rapport à l'autre de telle sorte qu'ils peuvent adopter une configuration de fermeture et une configuration de libération, dans lequel, dans la configuration de fermeture, les anneaux dentés relient la section d'accouplement pour moyen manipulateur (26) et la section d'accouplement pour effecteur final (30), et dans lequel, dans la configuration de libération, les anneaux dentés peuvent être déplacés l'un par rapport à l'autre de telle sorte que la section d'accouplement pour moyen manipulateur (26) et la section d'accouplement pour effecteur final (30) peuvent être déplacées l'une par rapport à l'autre.

14. Installation de manipulation (10), comprenant un moyen manipulateur (12), un effecteur terminal (14), et un accouplement de sécurité (24) selon l'une des revendications précédentes, dans laquelle l'effecteur terminal (14) est fixé au moyen manipulateur (12) au moyen de l'accouplement de sécurité (24).
